(19) Europäisches Patentamt
European Patent Office
Office européen des brevets

(11) EP 4 010 423 B1

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **20746683.0**

(22) Anmeldetag: **03.08.2020**

(51) Internationale Patentklassifikation (IPC):
***C08L 33/12*** *(2006.01)*

(52) Gemeinsame Patentklassifikation (CPC):
(C-Sets verfügbar)
**C08L 33/12** (Forts.)

(86) Internationale Anmeldenummer:
**PCT/EP2020/071776**

(87) Internationale Veröffentlichungsnummer:
**WO 2021/023699 (11.02.2021 Gazette 2021/06)**

# (54) DURCHSICHTIGE ZUSAMMENSETZUNG

TRANSPARENT COMPOSITION

COMPOSITION TRANSPARENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2019 EP 19190668**

(43) Veröffentlichungstag der Anmeldung:
**15.06.2022 Patentblatt 2022/24**

(73) Patentinhaber: **Evonik Operations GmbH**
**45128 Essen (DE)**

(72) Erfinder:
- **LEHMANN, Kathrin**
  **51377 Leverkusen (DE)**
- **HESSNER, Sebastian**
  **45127 Essen (DE)**
- **NAWRACALA, Angela**
  **51469 Bergisch Gladbach (DE)**
- **AMAJJAHE, Sadik**
  **40591 Düsseldorf (DE)**
- **BUSCH, Stefan**
  **44879 Bochum (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 640 418**
**WO-A1-86/04072**
**WO-A1-2012/034821**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 010 423 B1

(52) Gemeinsame Patentklassifikation (CPC): (Forts.)

C-Sets
**C08L 33/12, C08L 51/085;**
**C08L 33/12, C08L 53/00**

## Beschreibung

Die vorliegende Erfindung ist auf Zusammensetzungen bestehend aus einem Poly(alkyl)(meth)acrylat-Matrixmaterial und mindestens einem Additiv, wobei die Transparenz durch die Zugabe des Additivs minimal beeinflusst wird, gerichtet.

Transparente Kunststoffbauteile finden sich in zahlreichen Anwendungen: beispielweise als Blenden bei Haushaltgeräten, als Abdeckungen für Instrumente in Kraftfahrzeugen oder als Displays.

Die hohe optische Transparenz und die Abwesenheit einer Eigenfarbe von Polymethylmethacrylat (PMMA) Formmassen ermöglicht die Realisierung eines breiten Spektrums von verschiedenen Einfärbungen, die für dekorative Abdeckungen (z. B. verschiedene Blenden im Autointerieur und -exterieur) zum Einsatz kommen. Des Weiteren können durch den Einsatz von eingefärbten PMMA Formmassen Oberflächen der höchsten Güteklasse mit hohem Glanz realisiert werden, was für die Endanwendungen eine wichtige Rolle spielt.

Die Oberflächen der aus PMMA hergestellten Teile besitzen eine hohe Härte, die für deren Endanwendung als dekorative Abdeckung von entscheidender Bedeutung ist. Es ist allgemein bekannt, dass PMMA unter den thermoplastischen Werkstoffen derjenige mit der höchsten Oberflächenhärte und Kratzfestigkeit, bestimmt mittels der Bleistifthärteprüfung, ist. Dennoch müssen für einige Anwendungen mit besonders hohen Ansprüchen an die Oberflächen, insbesondere bei dekorativen und die Aufmerksamkeit anziehenden Teilen, selbst PMMA Formkörper gegen verschiedene Verschleißerscheinungen geschützt werden. Hierzu werden die Bauteile oftmals mit einer Beschichtung ausgestattet.

Allgemein stellt die Anfälligkeit von Kunststoffformkörpern gegenüber Wischspuren und Kratzern ein Problem dar, da die betreffenden Gegenstände dadurch unansehnlich werden. Es wurden daher zahlreiche Verfahren entwickelt, um Kunststoffe mit kratzfesten Schichten zu versehen.

Als Beschichtungsmaterialien werden bevorzugt härtbare Kunststoffharze verwendet. Genannt seien beispielsweise Beschichtungen von Polyestern mit einem Dialdehyd (z. B. US 3484157), Polyurethanen (z. B. DE 2611782), mit Alkyltitanat (z. B. US 3700487), Melamin in den verschiedensten Variationen oder Melamin-Polyol (z. B. GB 1308697, US 3862261). Weiter sind Acrylharze der verschiedensten Arten (z. B. DE 2317874), fluorierte Kohlenwasserstoffe in den verschiedensten Kombinationen und Modifikationen (NL 6608316, DE 1963278, DE 2454076), vernetzte Polyalkyleniminverbindungen (US 3766299) und Siliciumverbindungen, insbesondere Silikonharze (z. B. BE 821403, US 3451838, US 3707397) zur Beschichtung herangezogen worden. Die EP 180129 beschreibt ein Verfahren zur Beschichtung von Kunststoffen mit Kratzfest- und Antireflexwirkung bestehend aus Acrylat- oder Methacrylatpolymeren, Siliciumorganischen Polymerisaten oder Melaminharzen.

Es wurden auch verschiedenste Sol-Gel-Systeme beschrieben, die u. a. mit Hilfe von Plasma-Verfahren eingesetzt werden können. Diese Systeme werden häufig aus modifizierten Silanen und Alkoxiden durch Hydrolyse- und Kondensationsprozesse hergestellt. Aufgrund der Reaktivität dieser Systeme ist die Lagerstabilität der Lackmischung meist sehr kurz. Des Weiteren werden auch strahlungshärtbare Beschichtungsmittel zur Beschichtung von Kunststoffsubstraten eingesetzt. So werden in der US 6,420,451 strahlungshärtbare Beschichtungsmittel für die Beschichtung von optischen Substraten, beispielsweise Linsen, aus verschiedenen Kunststoffsubstraten, wie beispielsweise Polycarbonat, beschrieben. Die Beschichtungsmittel enthalten neben monofunktionellen Acrylaten Urethanacrylate und kolloidale Metalloxide, insbesondere $SiO_2$-Teilchen.

Allen zuvor beschriebenen Verfahren ist gemein, dass sie zusätzliche und aufwendige Arbeitsschritte, nämlich Applizierung und Aushärtung des Lacksystems/ Beschichtungsmittels, benötigen und/oder aus mehreren Schichten bestehen.

Speziell zur Verbesserung der Kratzfestigkeit von thermoplastischen Elastomeren, insbesondere Polyurethanen (TPU), Polyamiden (PEBA), Copolyestern (COPE) und Styrolen (S-TPE), wurden in der EP 1640418 organomodifizierte Siloxane als Additive vorgeschlagen. Diese Siloxane werden als Additiv direkt der Formmasse zugegeben. Sie bilden auf der Oberfläche des aus der Formmasse hergestellten Formteils eine Art Schmierfilm. Beschädigungen der Oberfläche werden dadurch verhindert, sodass der auf das Formteil einwirkende Gegenstand über die Oberfläche gleiten kann. Die Formkörper bedürfen daher angeblich keiner zusätzlichen Beschichtung mit einem Kratzfestlack.

Eine genauere Betrachtung der EP 1640418 zeigt, dass es sich bei den dort verwendeten Kunststoffen um - im Vergleich zu PMMA-sehr weiche Kunststoffe handelt. Diese weisen eine elastische Oberfläche auf und sind daher schon von sich aus weniger empfindlich gegen mechanische Einwirkungen mit scharfen oder spitzen Gegenständen. Somit stellen solche elastischen Polymere ganz andere Anforderungen im Hinblick auf eine kratzfeste Ausrüstung als die z. B. sehr harte Oberfläche von PMMA-Formteilen. Einen Hinweis darauf, dass organomodifizierte Siloxane die Wischfestigkeit von Oberflächen von PMMA-Formteilen verbessern können, gibt es in der EP 1640418 nicht.

In der DE 10059454 werden Additive mit Siloxaneinheiten vorgeschlagen, welche die Kratzfestigkeit von Oberflächen von Formteilen aus verschiedenen Polymeren verbessern sollen. Es handelt sich dabei um Polyester-Polysiloxanmodifizierte Polyolefine, die durch Umsetzung von Säureanhydrid-gepfropften Polyolefinen mit hydroxyfunktionellen Organopolysiloxanen erhalten werden. Diese Polyester-Polysiloxan-Copolymere werden als Additiv in die Polymermatrix

zugegeben. Nachteilig an diesem Verfahren ist jedoch die aufwendige Herstellung der Polyester-Polysiloxan-Copolymere.

In der WO 2012/034821 werden PMMA-haltige Formmassen und Formkörper beansprucht, deren Kratzfestigkeit mit Polyestersiloxanen erhöht wird. Besonders bevorzugt und in den Beispielen mit technischen Daten unterlegt sind die Polyestersiloxane, deren Polyesterteil unter Verwendung von Hexenol hergestellt wurden, somit ist das verbindende Element vom Polyester selbst und dem Siloxan eine reine Alkylenbrücke.

Aufgabe der vorliegenden Erfindung war die Bereitstellung von Zusammensetzungen mit hoher Kratzfestigkeit, wobei die Zusammensetzungen vorzugsweise hochtransparent sein sollen.

Überraschenderweise weisen Zusammensetzungen mit speziellen Polysiloxan-Polyester-Copolymeren, die zwischen den Polyestereinheiten und dem Polysiloxan eine sauerstoffhaltige Brücke aufweisen, sowohl eine hohe Kratzfestigkeit als auch eine hohe Transparenz auf.

Gegenstand der vorliegenden Erfindung sind Zusammensetzungen bestehend aus einem Poly(alkyl)(meth)acrylat-Matrixmaterial und mindestens einem Additiv der Formel (I)

$$M^1_{m1}M^2_{m2}D^1_{d1}D^2_{d2} \qquad \text{(I)}$$

mit

$M^1$ = $[R_3SiO_{1/2}]$
$M^2$ = $[R_2R^1SiO_{1/2}]$
$D^1$ = $[R_2SiO_{2/2}]$
$D^2$ = $[RR^1SiO_{2/2}]$

wobei R, $R^1$, m1, m2, d1 und d2 wie unten und in den Ansprüchen definiert sind.

Weitere Gegenstände sind Formmassen und Formköper enthaltend die erfindungsgemäßen Zusammensetzungen.

Ein weiterer Gegenstand der vorliegenden Erfindung ist die Verwendung der erfindungsgemäßen Formkörper als dekorative Abdeckblenden oder funktionelle Anbauteile, in Kraftfahrzeugen, Unterhaltungselektronik oder in Haushaltgeräten.

Die erfindungsgemäßen Zusammensetzungen, die erfindungsgemäßen Formmassen und Formkörper enthaltend die erfindungsgemäßen Zusammensetzungen sowie die erfindungsgemäße Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Die verschiedenen Fragmente in der Formel (I) und (II) sind statistisch verteilt. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Die in den hier angeführten Formeln (I) und (II) wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen. Dies gilt auch für als solche an sich exakt wiedergegebene Strukturformeln.

Ein Vorteil der erfindungsgemäßen Zusammensetzungen ist, dass Formteile ausschließlich bestehend aus den erfindungsgemäßen Zusammensetzungen eine höhere Transparenz, wegen einer niedrigeren Opazität, aufweisen als entsprechende Zusammensetzungen des Standes der Technik.

Ein Vorteil der erfindungsgemäßen Zusammensetzungen ist, dass transparente Kunststoffformteile mit hoher Oberflächengüte hergestellt werden, welche ohne eine zusätzliche Kratzfestbeschichtung bzw. Folie, eine sehr gute

Widerstandsfähigkeit gegen Wischen, Scheuern und Kratzen aufweisen.

Ein weiterer Vorteil der erfindungsgemäßen Zusammensetzungen ist, dass farbige Kunststoffformteile durch die Zugabe des Additivs nur sehr wenig in ihrem Farbeindruck verändert werden, die farbmetrischen Werte L*, a* und b* im CieLab System weichen deshalb nur sehr wenig ab.

Ein weiterer Vorteil der erfindungsgemäßen Zusammensetzungen ist, dass dunkle Kunststoffformteile, besonders blaue, graue, braune, schwarze und anthrazit farbige, keinen für das menschliche Auge wahrnehmbaren Schleier aufweisen.

Ein weiterer Vorteil der erfindungsgemäßen Zusammensetzungen ist, dass die Kunststoffformteile mit glatter Oberfläche sehr hohe Glanzwerte aufweisen.

Die erfindungsgemäßen Kunststoffformteile weisen den Vorteil auf, dass sie aufgrund ihrer Widerstandsfähigkeit gegen Wischen, Scheuern und Kratzen sowohl für den Innen- als auch für den Außenbereich geeignet sind.

Im Rahmen der vorliegenden Erfindung werden die Begriffe Formkörper und Formteil synonym verwendet. Diese sind nicht nur aus den erfindungsgemäß beanspruchten Zusammensetzungen durch Spritzguss hergestellt, sondern auch solche, die z.B. durch eine kontinuierliche Extrusion z.B. in Form eines Profils, einer Folie oder einer Platte (Sheet) anfallen oder auch solche Teile, die durch das Tiefziehen einer Folie oder eines Sheets erzeugt werden.

Auch mehrlagige Folien oder Sheets, z.B. ABS schwarz eingefärbt und transparente PMMA-Schicht wie im Automobilbau, in dem eventuell nur die Deckschicht das Additiv enthält, fallen unter die Definition von Formkörper und Formteil.

Unter "Poly(alkyl)(meth)acrylat" werden sowohl Methacrylate als auch Acrylate verstanden; wobei die Ester der Acrylsäure Alkylacrylate sind, gleiches gilt auch für die Ester der Methacrylsäure.

Die erfindungsgemäßen Zusammensetzungen bestehen aus

a) einem Poly(alkyl)(meth)acrylat-Matrixmaterial
b) zumindest einem Additiv der Formel (I)

$$M^1_{m1}M^2_{m2}D^1_{d1}D^2_{d2} \quad (I)$$

mit

$M^1$ = $[R_3SiO_{1/2}]$
$M^2$ = $[R_2R^1SiO_{1/2}]$
$D^1$ = $[R_2SiO_{2/2}]$
$D^2$ = $[RR^1SiO_{2/2}]$

wobei

R unabhängig voneinander ein Alkylrest oder ein aromatischer oder ein alkylaromatischer Rest ist, wobei die Alkylreste bevorzugt 1 bis 4 Kohlenstoffatome, die aromatischen oder alkylaromatischen Reste bevorzugt 6 bis 8 Kohlenstoffatome aufweisen,
$R^1$ unabhängig voneinander $-R^3 - (O - R^4)_p$ ist, wobei
$R^4$ ein Polyesterrest ist,
$R^3$ ein von Sauerstoffatomen unterbrochener p+1 valenter Kohlenwasserstoff ist, der 3 bis 10 Kohlenstoffatome aufweist, bevorzugt 4 bis 8, insbesondere bevorzugt 5 bis 6 Kohlenstoffatome,
wobei p gleich 1 bis 4, bevorzugt 1 bis 2 ist,
mit
d1 = 5 bis 70, bevorzugt 10 bis 60, insbesondere bevorzugt 15 bis 50,
d2 = 0 bis 20, bevorzugt 1 bis 15, mehr bevorzugt 2 bis 10,
m1 = 0 bis 2,
m2 = 0 bis 2, bevorzugt 2,
mit der Maßgabe, dass gilt:

$$m1 + m2 = 2,$$

N = d1 + d2 + 2 von 10 bis 80, bevorzugt von 15 bis 70 ist, mehr bevorzugt von 20 bis 60, und

$$d2 + m2 \geq 1.$$

Die Werte von d1, d2, m1, m2 und N sind als durchschnittliche Werte im Polymermolekül zu verstehen. Die erfindungsgemäß zu verwendenden Additive liegen bevorzugt in Form von äquilibrierten Gemischen vor. Die in den Formeln verwendeten Indices sind als statistische Mittelwerte (Zahlenmittel) zu betrachten.

Die einzelnen Fragmente der Formeln (I) und (II) sind bevorzugt statistisch aufgebaut.

Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Bevorzugt handelt es sich bei den erfindungsgemäßen Zusammensetzungen bestehend aus

a) einem Poly(alkyl)(meth)acrylat-Matrixmaterial und
b) zumindest einem Additiv der Formel (I)

um durchsichtige Zusammensetzungen.

Bevorzugt ist der Prozentsatz an Polyester-modifizierten Siloxaneinheiten in Formel (I), also (d2 + m2) * 100 / N, gleich 4 bis 40 %, mehr bevorzugt von 8 bis 30 %, besonders bevorzugt von 10 bis 25 %.

Die Radikale $R^3$ sind bevorzugt unabhängig voneinander gesättigte oder ungesättigte von Sauerstoff unterbrochene Kohlenwasserstoffe mit p+1 Bindungsstellen, mehr bevorzugt besteht $R^3$ aus den Fragmenten (a) und (b), wobei die beiden Fragmente über ein Sauerstoffatom miteinander verbunden sind. Die Fragmente (a) und (b) bestehen vorzugsweise aus den Elementen Kohlenstoff, Sauerstoff und Wasserstoff, mehr bevorzugt sind die Fragmente (a) und (b) frei von Heteroatomen, also insbesondere frei von Sauerstoffatomen.

Fragment (a) weist bevorzugt gesättigte oder ungesättigte Kohlenwasserstoffe auf mit 2 bis 4 Kohlenstoffatome, bevorzugt 2 bis 3 Kohlenstoffatome und bevorzugt frei von Heteroatomen.

Fragment (b) weist bevorzugt gesättigte Kohlenwasserstoffe auf mit 1 bis 6 Kohlenstoffatomen, bevorzugt 2 bis 6 Kohlenstoffatomen und ist bevorzugt frei von Heteroatomen.

Weiter mehr bevorzugt weisen die Radikale $R^3$ enthaltend als Fragment (a) mindestens eine Ethylen-, 1,2-Propylen-, 1,3-Propylen, 1,2-Butylen-, 1,4-Butylengruppe oder But-2-en-1,2,4-triyl (aus Gopanol) auf und Fragment (b) wie vorstehend definiert.

Besonders bevorzugt weisen die Radikale $R^3$ als Fragment (a) einen divalenten gesättigten Kohlenwasserstoff bestehend aus 2 bis 4 Kohlenstoffatomen und Wasserstoff und als Fragment (b) für p gleich 1 einen Rest ausgewählt aus Ethylen, 1,2-Propylen- und 1,3-Propylen, für p gleich 2 einen Rest ausgewählt aus Prop-1,2,3-triyl- (aus Glycerin), Neopent-triyl- (aus Neopentanol), Trimethylolprop-triyl- (aus TMP) Rest.

Besonders bevorzugt weisen die Radikale $R^3$ als Fragment (a) mindestens einen obligat divalenten, gesättigten Rest auf bestehend aus 2 bis 4 Kohlenstoffatomen und Wasserstoff und als Fragment (b) für p gleich 1 einen Rest ausgewählt aus Ethylen, 1,2-Propylen- und 1,3-Propylen, für p gleich 2 einen Rest ausgewählt aus Prop-1,2,3-triyl- (aus Glycerin), Neopent-triyl- (aus Neopentantriol), Trimethylolprop-triyl- (aus TMP) Rest.

Weiter besonders bevorzugt weist der Rest $R^3$ einen Kohlenwasserstoff mit 5 bis 6 Kohlenstoffatomen und einem Sauerstoffatom auf, wobei das Fragment (a) eine Ethylen- oder 1,3-Propylengruppe ist.

Die Polyesterreste $R^4$ sind vorzugsweise aus 3 bis 30, bevorzugt aus 4 bis 20 und besonders bevorzugt aus 5 bis 15 Estereinheiten aufgebaut.

Die Polyesterreste $R^4$ sind vorzugsweise aus Acylrestender Säuren Essigsäure, Propionsäure, Buttersäure, Isobuttersäure, Valeriansäure, 3-Methyl-Buttersäure, Capronsäure, Önanthsäure, Caprylsäure, 3,5,5-Trimethyl-capronsäure sowie den entsprechenden Hydroxysäuren oder Lactonen, aufgebaut, mehr bevorzugt Valeriansäure, 3-Methyl-Buttersäure, Capronsäure, Önanthsäure, Caprylsäure, 3,5,5 Trimethyl-capronsäure sowie den entsprechenden Hydroxysäuren oder Lactonen und mehr bevorzugt Valeriansäure und Capronsäure sowie den entsprechenden Hydroxysäuren oder Lactonen, besonders bevorzugt 5-Hydroxy-Valeriansäure bzw. $\delta$-Valerolacton und 6-Hydroxy-Capronsäure bzw. $\varepsilon$-Caprolacton.

Die Polyesterreste $R^4$ können gleich oder verschieden in Bezug auf ihre Anzahl an Säureresten aufgebaut sein.

Vorzugsweise sind die Polyesterreste $R^4$ aus gleichen Säureresten aufgebaut. Bevorzugte Polyesterreste sind solche, die durch ringöffnende (Poly)-Veresterung von Lactonen erhalten werden. Besonders bevorzugt sind die Polyesterreste, die durch (Poly)-Veresterung von Caprolactonen oder Valerolactonen, insbesondere von $\varepsilon$-Caprolacton, 3,5,5-Trimethyl-Caprolacton oder $\delta$-Valerolacton und besonders bevorzugt von $\varepsilon$-Caprolacton erhalten werden.

Mehr bevorzugt sind die Polyesterreste $R^4$ aus gleichen Säureresten aufgebaut mit unterschiedlichen Anzahlen an Säureresten und besonders bevorzugt aus 5-Hydroxy-Valeriansäure bzw. $\delta$-Valerolacton und 6-Hydroxy-Capronsäure bzw. $\varepsilon$-Caprolacton.

Bevorzugt weist der Rest $R^1$ den Rest $R^3$ als einen Kohlenwasserstoff mit 5 bis 6 Kohlenstoffatomen und einem

Sauerstoffatom auf, wobei das Fragment (a) eine Ethylen- oder 1,3-Propylengruppe ist und einen Polyesterrest $R^4$ aus gleichen Säureresten auf, wobei der Polyesterrest $R^4$ aus 5 bis 15 ε-Caprolacton- und δ-Valerolacton Einheiten aufgebaut ist

Bevorzugte Additive der Formel (I) sind solche, bei denen der Polyesterrest aus 3 bis 30, bevorzugt aus 4 bis 20 und besonders bevorzugt aus 5 bis 15 ε-Caprolacton- und/oder δ-Valerolacton Einheiten aufgebaut ist.

Mehr bevorzugte Additive der Formel (I) sind solche, bei denen der Polyesterrest aus 3 bis 30, bevorzugt aus 4 bis 20 und besonders bevorzugt aus 5 bis 15 ε-Caprolacton- und/oder δ-Valerolacton Einheiten aufgebaut ist, wobei der Prozentsatz an Polyester modifizierten Siloxaneinheiten also (d2 + m2) * 100 / N gleich 5 bis 40 % ist, mehr bevorzugt von 8 bis 30 %, besonders bevorzugt von 10 bis 25 %.

Die bevorzugten Additive der Formel (I) weisen als R ausschließlich Methylgruppen auf, N ist gleich 20 bis 60, und bei denen die Polyesterreste $R^4$ von 5 bis 15 Estereinheiten aufgebaut ist.

Mehr bevorzugte Additive der Formel (I) weisen als R ausschließlich Methylgruppen auf, N ist gleich 20 bis 60, und wobei der Rest $R^1$ den Rest $R^3$ als einen Kohlenwasserstoff mit 5 bis 6 Kohlenstoffatomen und einem Sauerstoffatom auf, wobei das Fragment (a) eine Ethylen oder 1,3-Propylengruppe ist und einen Polyesterrest $R^4$ aus gleichen Säureresten auf, wobei der Polyesterrest $R^4$ aus 5 bis 15 ε-Caprolacton- und/oder δ-Valerolacton Einheiten aufgebaut ist.

Besonders bevorzugte Additive der Formel (I) weisen als R ausschließlich Methylgruppen auf, N ist gleich 20 bis 60, und wobei der Rest $R^1$ den Rest $R^3$ als einen Kohlenwasserstoff mit 5 bis 6 Kohlenstoffatomen und einem Sauerstoffatom auf, wobei das Fragment (a) eine Ethylen oder 1,3-Propylengruppe ist und einen Polyesterrest $R^4$ aus gleichen Säureresten auf, wobei der Polyesterrest $R^4$ aus 5 bis 15 ε-Caprolacton- und/oder δ-Valerolacton Einheiten aufgebaut ist, wobei der Prozentsatz an Polyester modifizierten Siloxaneinheiten also (d2 + m2) * 100 / N gleich von 8 bis 30 % ist, besonders bevorzugt von 10 bis 25 %.

Zur Bestimmung der Transparenz werden Formkörper bestehend ausschließlich aus den erfindungsgemäßen Zusammensetzungen, also bestehend aus einem Poly(alkyl)(meth)acrylat-Matrixmaterial und mindestens einem Additiv gemäß Formel (I) hergestellt, wobei die Additive bevorzugt zu 1 Gew-%, 2 Gew-% oder 3 Gew-% enthalten sind. Die Formkörper sind bevorzugt Platten, mehr bevorzugt Platten mit einer Dicke von 1, 2 oder 3 Millimetern. Besonders bevorzugt wird die Transparenz von Platten mit einer Dicke von 2 mm und mit einem Additivgehalt von 2 Gew-% bestimmt. Als Vergleichswert dient eine analoge Platte ohne Additiv.

Die Transparenz wird bevorzugt als Opazität bestimmt, mehr bevorzugt wird die Opazität mit einem SP62 der Firma X-Rite gemäß deren Gebrauchsanweisung bestimmt. Bevorzugt erhöht sich die Opazität gegenüber dem Vergleichswert um nicht mehr als 25%, mehr bevorzugt um nicht mehr als 22%, besonders bevorzugt um nicht mehr als 19% und insbesondere bevorzugt um nicht mehr als 16%; diese Erhöhung wird nach der Formel (Opaz {Probe} - Opaz {Vergleich}) * 100% / Opaz {Vergleich} bestimmt. Diese Erhöhung kann auch negative Werte annehmen, wenn die Transparenz der Probe gegenüber dem Vergleichswert erhöht wurde. Vorgenannte Prozentangaben basieren auf Opazitätsmessungen von Platten mit einer Dicke von 2 mm und mit einem Additivgehalt von 2 Gew-%.

Die erfindungsgemäßen Additive der Formel (I) können nach den bekannten Verfahren durch Umsetzung von entsprechenden Wasserstoffsiloxanen mit ungesättigten Kohlenwasserstoffen und anschließender (Poly)-Veresterung oder durch direkte Umsetzung von ungesättigten Polyestern mit Wasserstoffsiloxanen erhalten werden. Die Umsetzung kann wie in EP 1 640 418 beschrieben durch Hydrosilylierung bzw. durch dehydrogenative Hydrosilylierung erfolgen. Die Herstellung Polyesterreste aufweisender Polysiloxane kann z. B. EP 0 208 734 entnommen werden.

Bevorzugt werden die erfindungsgemäßen Additive der Formel (I) in einem ersten Schritt im Sinne einer Hydrosilylierung entsprechender Wasserstoffsiloxane der Formel (II)

$$M^1_{m1}M^2_{m2}D^1_{d1}D^2_{d2} \qquad \text{(II)}$$

mit

$M^1$ = $[R_3SiO_{1/2}]$
$M^{2'}$ = $[R_2R^HSiO_{1/2}]$
$D^1$ = $[R_2SiO_{2/2}]$
$D^{2'}$ = $[RR^HSiO_{2/2}]$

wobei

R unabhängig voneinander ein Alkylrest oder ein aromatischer oder alkylaromatischer Rest ist, wobei die Alkylreste bevorzugt 1 bis 4 Kohlenstoffatome, die aromatischen oder alkylaromatischen Reste bevorzugt 6 bis 8 Kohlenstoffatome aufweisen,
$R^H$ Wasserstoff ist,
mit

d1 = 5 bis 70, bevorzugt 10 bis 60, insbesondere bevorzugt 15 bis 50
d2 = 0 bis 20, bevorzugt 1 bis 15, mehr bevorzugt 2 bis 10
m1 = 0 bis 2,
m2 = 0 bis 2, bevorzugt 2
mit der Maßgabe, dass gilt:

$$m1 + m2 = 2,$$

N = d1 + d2 + 2 von 10 bis 80, bevorzugt von 15 bis 70 ist, mehr bevorzugt von 20 bis 60, und

$$d2 + m2 \geq 1,$$

mit ungesättigten Verbindungen $R^{3V}$-$(OH)_p$, wobei $R^{3V}$ein von mindestens einem Sauerstoffatom unterbrochener p+1 valenter ungesättigter Kohlenwasserstoffrest ist, wobei dieser Kohlenwasserstoffrest bevorzugt ununterbrochene Alkyleneinheiten mit 1 bis 6 Kohlenstoffatome, besonders bevorzugt 2 bis 5 Kohlenstoffatome aufweist, wobei p gleich 1 bis 4, bevorzugt 1 bis 2 ist,
mit einem zur Hydrosilylierung geeigneten Katalysator umgesetzt
und in einem zweiten Schritt die OH-Gruppen des Restes $R^3$ mit Säurerestmonomeren, bevorzugt Anhydriden, Estern und Lactonen, insbesondere bevorzugt Lactonen,
wobei alle Indices und Reste wie vorstehend zu Formel (I) auch in ihren Bevorzugungen definiert sind.

Die erfindungsgemäßen Zusammensetzungen bestehen bevorzugt zu 0,05 Gew.-% bis 10 Gew.-%, mehr bevorzugt zu 0,1 Gew.-% bis 5 Gew.-%, insbesondere bevorzugt zu 0,5 Gew.-% bis 3 Gew.-%, aus dem Additiv der Formel (I) bezogen auf die Gesamtzusammensetzung.

Bevorzugt weisen die erfindungsgemäßen Formmassen und Formkörper neben den erfindungsgemäßen Zusammensetzungen Hilfs- und Füllstoffe auf, mehr bevorzugt nicht mehr als 10 Gew.-%, besonders bevorzugt nicht mehr als 5 Gew.-% und insbesondere nicht mehr als 2 Gew.-% Hilfs- und Füllstoffe enthalten.

Die erfindungsgemäßen Formmassen und Formkörper enthalten neben den erfindungsgemäßen Zusammensetzungen und den Hilfs- und Füllstoffen weitere Zusätze wie Farbmittel ausgewählt aus organischen Farbstoffen und Pigmenten, Lichtstabilisatoren ausgewählt aus UV-Stabilisatoren, UV-Absorbern und IR-Absorbern, antimikrobielle Wirkstoffe, Flammschutzmittel, Thermostabilisatoren, Antioxidantien, vernetzende Polymere und/oder faserverstärkende Zusatzstoffe organischer oder anorganischer Art, sowie Schlagzähmodifizierungsmittel.

Bevorzugt werden als farbgebende Komponenten Farbstoffe ausgewählt.

In einer besonders bevorzugten Ausführungsform enthalten die erfindungsgemäßen Formmassen bzw. der Formkörper ein Schlagzähmodifizierungsmittel, insbesondere in einem Anteil von 0,1 bis 15 Gew.-%, bevorzugt 0,5 bis 10 Gew.-% und ganz besonders bevorzugt 1 bis 6 Gew.-%, jeweils bezogen auf die Gesamtmasse der Formmasse bzw. des Formkörpers. Es können alle handelsüblichen Schlagzähmodifizierungsmittel verwendet werden, insbesondere Elastomerteilchen mit einem mittleren Teilchendurchmesser von 10 bis 300 nm (Messungen z. B. mit der Ultrazentrifugenmethode). Bevorzugt weisen die Elastomerteilchen einen Kern mit einer weichen Elastomerphase und zumindest einer daran gebundenen Hartphase auf.

Bei dem erfindungsgemäß als Komponente a) verwendeten Poly(alkyl)(meth)acrylat-Matrixmaterial handelt es sich bevorzugt um Homo- oder Copolymere von Methylmethacrylat. Mischungen sowie Blends aus verschiedenen Poly(alkyl)(meth)acrylaten und anderen Polymeren sind ebenfalls von der Erfindung eingeschlossen. Auch ein Copolymer aus zumindest einem Poly(alkyl)(meth)acrylat und weiteren Comonomeren ist Gegenstand der vorliegenden Erfindung. Die erfindungsgemäße Komponente a) ist kein thermoplastisches Elastomer.

Unter "alkyl" werden dabei verzweigte oder unverzweigte, cyclische oder lineare Alkylreste mit 1 bis 20, bevorzugt 1 bis 8, besonders bevorzugt 1 bis 4 Kohlenstoffatomen, welche mit funktionellen Gruppen substituiert sein können oder Heteroatome wie O, S oder N, bevorzugt O oder N, mehr bevorzugt O aufweisen können. Bevorzugt handelt es sich um einen Methyl-, Ethyl-, Butyl- oder Cyclohexyl-Rest.

Das Matrixmaterial a) kann ein Homopolymer, ein Copolymer oder Mischungen davon sein. So wird zumindest eine Komponente des Matrixmaterials zu 50 bis 100 Gew.-%, bevorzugt zu 80 bis 100 Gew.-%, mehr bevorzugt zu 90 bis 100 Gew.-%, besonders bevorzugt weiter mehr bevorzugt 95 bis 100 Gew.-%, und insbesondere zu 99 bis 100 Gew. -% aus Methylmethacrylat polymerisiert. 100 Gew.-% entsprechen einem Homopolymer, niedrigere Konzentrationen entsprechen einem Copolymer. Diese Komponente (Hauptkomponente) ist im Matrixmaterial zu mindestens 50 Gew.-% bis 100 Gew.-%, bevorzugt von 70 bis 95 Gew.-%, besonders bevorzugt von 80 bis 90 Gew.-% vorhanden.

Weitere Polymerisationsmonomere sind bevorzugt Styrol, $\alpha$-Methylstyrol, C2- bis C4-Alkyl(meth)acrylate und

Maleinsäureanhydrid. Bevorzugte Alkyl(meth)acrylate sind Ethylacrylat und Butylacrylat, insbesondere n-Butylacrylat. Diese Polymerisationsmonomere werden bevorzugt zu 1 bis 50 Gew.-%, mehr bevorzugt zu mehr als 1 bis zu 20 Gew.-% und insbesondere zu 5 bis 10 Gew.-% polymerisiert

Als besonders bevorzugte Mengenanteile haben sich erwiesen:

- 65 bis 85, bevorzugt 70 bis 80 Gew.-% Methylmethacrylat,
- 10 bis 20, bevorzugt 12 bis 18 Gew.-% Styrol und
- 5 bis 15, bevorzugt 8 bis 12 Gew.-% Maleinsäureanhydrid,

wobei von der vorliegenden Erfindung nur solche Kombinationen der drei Monomere umfasst sind, die in Summe 100 Gew. % ergeben. Aus den o. g. Mengenangaben lassen sich theoretisch auch Dreierkombinationen zusammenstellen, die weniger oder mehr als 100 Gew. % ergeben, diese sind jedoch nicht Bestandteil der vorliegenden Erfindung. Erfindungsgemäße Kombinationen können von einem Fachmann im Rahmen der o. g. Mengenbereiche einfach ermittelt werden.

Die Hauptkomponente des Matrixmaterials a) weist bevorzugt ein Molekulargewicht Mw (Gewichtsmittel) im Bereich von 40000 bis 280000 g/mol und besonders bevorzugt im Bereich von 60000 bis 140000 g/mol (Bestimmung von Mw mittels Gelpermeationschromatographie unter Bezug auf Polymethylmethacrylat als Eichstandard) auf.

Die Hauptkomponente des Matrixmaterials a) weist bevorzugt eine Lösungsviskosität in Chloroform bei 25°C (ISO 1628 - Teil 6) von kleiner/gleich 55, bevorzugt kleiner/gleich 50, insbesondere 40 bis 55, besonders bevorzugt von 43 - 50 ml/g auf.

Details zu der oben beschriebenen Mischung sowie der Herstellung der einzelnen Polymere und der Polymermischung können der WO 2005/108486 entnommen werden.

Die Einarbeitung der Additive der Formel (I) kann nach allen dem Fachmann bekannten Verfahren erfolgen. So wird das Matrixmaterial mit dem Additiv der Formel (I) und möglichen anderen Inhaltstoffen vorgemischt. Zur Vormischung dienen Mischaggregate wie z. B. Henschel- oder Taumelmischer. Nachfolgend wird die Vormischung unter Aufschmelzen oder unter Einwirkung von Scherkräften homogenisiert. Bevorzugt geschieht dies unter Einwirkung von Scherkräften in einem Kneter oder Extruder.

Bevorzugte Verfahren zur Herstellung von Formteilen sind Spritzgießen, Thermoformen, Kalandrieren oder Extrusion, dabei besonders bevorzugt sind verschiedene Ausführungen des Spritzgussverfahrens und des Kalandrierens. Die erfindungsgemäßen Formkörper werden bevorzugt vollständig aus der erfindungsgemäßen Formmasse hergestellt.

Es kann sich jedoch auch um ein Mehrkomponentenbauteil, z. B. hergestellt durch Coextrusion, Mehrkomponentenspritzguss etc. handeln, bei denen aus der erfindungsgemäßen Formmasse nur eine oder mehrere Schichten/Teile des Formkörpers hergestellt werden. In diesem Fall beträgt der Anteil der erfindungsgemäßen Formmasse am gesamten Formkörper bevorzugt 0,1% bis 99,9% Gew. %, besonders bevorzugt 10 bis 30 Gew. %.

Die erfindungsgemäßen Formkörper zeichnen sich unter anderem dadurch aus, dass sie eine Oberfläche der höchsten Güte aufweisen und mit Hilfe des Polymethylmethacrylats und des Zusatzes der o. g. Additiven vor der Schädigung bzw. des Verlustes der Oberflächengüte bewahrt werden können.

Auch wenn der besondere Vorteil der erfindungsgemäßen Formteile darin zu sehen ist, dass die Oberfläche kratz- und wischfest ist, so schließt dies dennoch nicht aus, dass die erfindungsgemäß hergestellten Formteile ganz oder teilweise mit einer Folie oder einem Lack beschichtet werden.

Die erfindungsgemäßen Formteile werden bevorzugt verwendet als dekorative Abdeckblenden oder funktionelle Anbauteile, in Kraftfahrzeugen, Unterhaltungselektronik oder in Haushaltgeräten.

## Messmethoden:

### Glanzmessung:

Die Messung des Glanzes wird in Anlehnung an die DIN 67530 bei verschiedenen Einstrahlungswinkeln (20°, 60°, 85°) durchgeführt. Als Glanz wird der regulär reflektierte Lichtanteil, bezogen auf einen unter einem definierten Winkel von 20°, 60° oder 85° zum Lot einfallenden Lichtstrahl bezeichnet. Die Messung wird mit einem Messgerät micro-gloss der Firma Byk-Gardner (Wesel) durchgeführt. Bei Glanzmessung von Kunststofffolien wird als Untergrund ein schwarzer Papierbogen genutzt. Der Glanz wird in Glanzeinheiten (GE) angegeben, die auf einen Schwarzglasstandard bezogen werden. Der Wert des Oberflächenglanzes sollte möglichst hoch sein.

### Bestimmung der Opazität:

Die Opazität ist das Maß für die optische Durchlässigkeit von Papier, Folien, Druckfarben und anderen Schichten. Die Messungen werden mit dem SP62 der Firma X-Rite gemäß deren Gebrauchsanweisung durchgeführt.

Bestimmung des Helligkeitswertes L*:

Die Helligkeitswerte L* werden mittels Spektralphotometer (SP 62, Firma X-Rite) der bestimmt.

Bestimmung der Wischbestänigkeit:

Zur Bestimmung der Wischbeständigkeit werden die hergestellten Kunststoffplatten mittels Crockmaster 670 (James H. Heal, UK) nach EN ISO 105-X12 bzw. BS 1006 X12 geprüft. Hierzu wird über die Platte mit einem Crocking Cloth und einem Auflagegewicht von 9N eine definierte Anzahl von Hüben (vorwärts/rückwärts) gewischt. Die Beurteilung erfolgt visuell, es erfolgt eine Benotung nach Noten von 1 für sehr gut bis 5 für ungenügend, wobei 1 spurlos, 2 wahrnehmbar, 3 gering, 4 stark und 5 sehr stark zerkratzt bedeutet.

Bestimmung der Kratzfestigkeit:

Mittels dem Multi-Finger Tester Taber 710 (Fa. Elcometer) wird die Prüfung nach BN 108-13 bzw. GMN 3943 durchgeführt. Bestimmt wird, ob eine Spitze (Durchmesser 1 mm) bei einem unterschiedlichen Auflagegewicht resultierend in 2, 5, 10, 12 und 15 N zu einem visuell wahrnehmbaren Kratzer führt. Dabei bewegen sich die fünf Spitzen mit 7,5 Meter pro Minute über die zu zerkratzende Fläche. Oberflächen erfindungsgemäßer Formkörper weisen weniger Kratzer oder weniger tiefe Kratzer auf als Oberflächen nichterfindungsgemäßer Formkörper.

Beispiel 1: Herstellung

Beispiel 1.1, Synthese:

In Anlehnung an Beispiel 1 der WO 1986/004072 wurden die Additive der Tabelle 1 hergestellt, die Angaben in Spalte E resultieren aus der Dosierung.

Zur Herstellung von Probe 12 (Tabelle 1) wurden in einem Vierhalskolben bestückt mit KPG-Rührer, Rückflusskühler und Thermometer 395,7 g wasserfreies ε-Caprolacton und 204,3 g eines Poly(methyl, hydroxyethylpropoxy)(dimethyl)siloxan-Copolymers mit einer OH-Zahl von 68 mg KOH/g vorgelegt und unter Rühren auf 140°C aufgeheizt. Bei 140°C wurden 0,3 g Zinn(II)-octoat zugegeben und die Exothermie bis 150°C zugelassen. Nach 7h Reaktionszeit bei 145°C wurde das viskose flüssige Produkt auf ca. 70°C abgekühlt und zum Erkalten in eine Metallwanne ausgegossen. Nach Abkühlen auf Raumtemperatur erhielt man ein festes farbloses Produkt mit einem per 1H-NMR bestimmten Restcaprolactongehalt von kleiner oder gleich 0,3%.

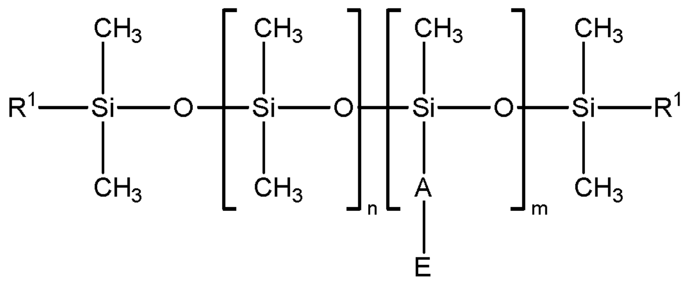

Tabelle 1: Additive gemäß Beispiel 1, die angegeben generischen Parameter beziehen sich auf die oben gezeigte Formel; die Fragmente der Spalte A sind mit der linken Valenz an das Silikonpolymer gebunden

| Probe | $R^1$ | A | E | n | m |
|---|---|---|---|---|---|
| 1 | -A-E | $-(CH_2)_6$-O- | 20 x Capryl | 28 | 0 |
| 2 | -A-E | $-(CH_2)_6$-O- | 14 x Capryl | 20 | 0 |
| 3 | -A-E | $-(CH_2)_6$-O- | 6 x Capryl | 13 | 5 |
| 4 | $-CH_3$ | $-(CH_2)_6$-O- | 14 x Capryl | 43 | 5 |
| 5 | -A-E | $-(CH_2)_6$-O- | 14 x Capryl + 6 x Valeryl | 28 | 0 |

(fortgesetzt)

| Probe | $R^1$ | A | E | n | m |
|---|---|---|---|---|---|
| 7 | -A-E | $-(CH_2)_3$-O-$(CH_2)_2$-O- | 20 x Capryl | 28 | 0 |
| 8 | -A-E | $-(CH_2)_2$-O-$(CH_2)_4$-O- | 20 x Capryl | 28 | 0 |
| 9 | -A-E | -Propoxy - Glyceryl | 10 x Capryl | 28 | 0 |
| 10 | -A-E | -Propoxy - TMP | 10 x Capryl | 28 | 0 |
| 11 | -A-E | $-(CH_2)_3$-O-$(CH_2)_2$-O- | 6 x Capryl | 13 | 5 |
| 12 | $-CH_3$ | $-(CH_2)_3$-O-$(CH_2)_2$-O- | 14 x Capryl | 43 | 5 |
| 13 | -A-E | $-(CH_2)_3$-O-$(CH_2)_2$-O- | 14 x Capryl + 6 x Valeryl | 28 | 0 |
| Nicht erfindungsgemäße Verbindungen sind die Proben 1 bis 5. | | | | | |

Der Rest Propoxy - Glyceryl entspricht:

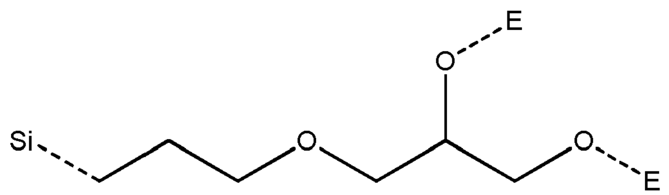

Der Rest Propoxy - TMP entspricht:

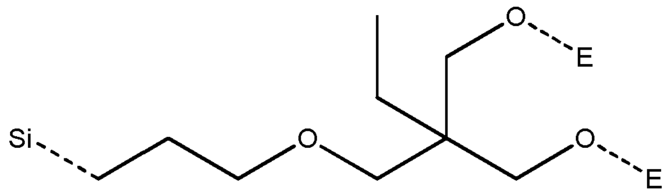

Die Reste E der Proben 1 bis 13 tragen terminal eine Hydroxylgruppe.

Beispiel 1.2, Herstellung der Compounds:

Zur Herstellung der Compounds werden 3 kg PMMA mit den entsprechenden Anteilen der Additive nach Beispiel 1.1 in einem Mischer der Fa. Henschel (Volumen von 4 Liter) 5 Minuten gemischt und dann in den Haupteinzug der Extrusionslinie gegeben. Die Extrusion erfolgt auf einem 27 mm Zweischneckenextruder (gleichläufige Compoundierschnecke mit einem Verhältnis L/D = 40 der Firma Leistritz. Das Temperaturprofil wurde dem jeweiligen Datenblatt des PMMA entnommen, PLEXIGLAS® FT 15, PLEXIGLAS® 8N und PLEXIGLAS® 8N 9V002 (schwarz) (Warenzeichen der Evonik, Deutschland) wurden von Evonik Röhm GmbH bezogen.

Beispiel 2: Herstellung und Prüfung der optischen Eigenschaften von Formteilen

Die im Beispiel 1 hergestellten Formmassen wurden auf einer Spritzgussmaschine zu Platten von einer Größe von 6 cm x 6 cm mit unterschiedlicher Dicke verarbeitet. Diese Platten wurden mit einem SP 62 der Firma X-rite auf auf ihre optischen Eigenschaften (Opazität und L*-Werte) hin untersucht. Die L*-Werte wurden über einen schwarzen Hintergrund einer Leneta Folie erhoben, wobei der schwarze Hintergrund einen L*-Wert von 27,41 aufwies. Probe 14 und 15 der Ergebnistabellen 2 und 3 sind jeweils die Werte für PLEXIGLAS ohne Additiv, wo mit Werten im Bereich von 40 Einheiten für L* ersichtlich wird, dass selbst transparentes PMMA ohne Additiv bereits eine starke Änderung herbeiführt, weil das Licht durch die PMMA-Schicht partiell verändert wird, bevor es auf den schwarzen Hintergrund trifft. Je höher also der L*-Wert der Probe ist, desto stärker verliert das Material an Transparenz. Diese Erhöhung des L*-Wertes geht dann auch mit einer Erhöhung des Wertes der Opazität einher, was aber eine Reduktion der Transparenz darstellt.

Tabelle 2: Opazität (abgekürzt als "Opaz.") und L*-Werte gemäß Beispiel 2 in PLEXIGLAS FT 15 mit unterschiedlichen Konzentrationen an Additiv und unterschiedlichen Schichtdicken (SD), Angaben der Konzentration in Gew.-% bezogen auf die Zusammensetzung, Probe 14 entspricht dem Matrixpolymer ohne ein Additiv

| Zus | 1% Additiv SD 2 mm | | 2% Additiv SD 2mm | | 3% Additiv SD 2 mm | | 2% Additiv SD 0,60 mm | |
|---|---|---|---|---|---|---|---|---|
| | Opaz. | L*-Wert | Opaz. | L*-Wert | Opaz. | L*-Wert | Opaz. | L*-Wert |
| 1 | 18,4 | 43,17 | 23,7 | 45,27 | 28,8 | 48,55 | 20,4 | 44,89 |
| 2 | 18,1 | 43,04 | 22,3 | 45,01 | 27,5 | 47,89 | | |
| 3 | | | 19,8 | 44,54 | | | | |
| 4 | | | 19,9 | 44,79 | | | | |
| 5 | 18,2 | 42,75 | 22,3 | 44,92 | 26,7 | 47,53 | 20,0 | 44,51 |
| 7 | 16,2 | 41,55 | 18,0 | 42,10 | 20,8 | 44,17 | 15,1 | 41,09 |
| 8 | 16,9 | 41,48 | 17,1 | 41,88 | 20,2 | 43,81 | | |
| 9 | 16,5 | 41,54 | 17,5 | 42,01 | | | | |
| 10 | | | 17,2 | 42,17 | | | | |
| 11 | | | 16,4 | 41,48 | | | | |
| 12 | | | 17,9 | 42,31 | 21,9 | 44,27 | 14,1 | 40,54 |
| 14 | 15,6 | 41,24 | 15,6 | 41,24 | 15,6 | 41,24 | 14,1 | 40,20 |

Tabelle 3: Opazität (abgekürzt als "Opaz.") und L*-Werte gemäß Beispiel 2 in PLEXIGLAS 8N mit unterschiedlichen Konzentrationen an Additiv und unterschiedlichen Schichtdicken (SD), Angaben der Konzentration in Gew.-% bezogen auf die Zusammensetzung, Probe 15 entspricht dem Matrixpolymer ohne ein Additiv

| Zus. | 1% Additiv SD, 2 mm | | 2% Additiv SD, 2mm | | 2% Additiv 0,60 mm | |
|---|---|---|---|---|---|---|
| | Opaz. | L*-Wert | Opaz. | L*-Wert | Opaz. | L*-Wert |
| 1 | 19,9 | 44,01 | 27,3 | 48,10 | 23,1 | 44,85 |
| 2 | 20,1 | 44,92 | 27,1 | 47,92 | 22,9 | 44,78 |
| 5 | 20,5 | 44,81 | 28,0 | 48,72 | 23,6 | 45,17 |
| 7 | 16,5 | 41,57 | 19,2 | 42,76 | 16,2 | 40,81 |
| 8 | 16,9 | 41,44 | 18,9 | 43,31 | 15,8 | 40,72 |
| 12 | 16,1 | 40,87 | 19,7 | 43,54 | 17,0 | 41,57 |
| 15 | 16,3 | 41,05 | 16,3 | 41,05 | | |

Die Beispiele der Tabellen 2 und 3 zeigen, dass die erfindungsgemäßen Zusammensetzungen durchweg niedrigere Werte in der Opazität wie auch im L*-Wert als die nicht erfindungsgemäßen Zusammensetzungen zeigen. Damit sind die hergestellten Kunststoffscheiben unter Verwendung der erfindungsgemäßen Zusammensetzungen deutlich klarer und weniger trüb als unter Verwendung von Zusammensetzungen des Standes der Technik.

Beispiel 2: Prüfung der mechanischen Eigenschaften

Zur Bestimmung der Wischbeständigkeit wurde die gemäß Beispiel 2 hergestellten Kunststoffplatten mittels Crockmaster 670 (James H. Heal, UK) nach EN ISO 105-X12 bzw. BS 1006 X12 geprüft. Hierzu wurde über die Platte mit einem Crocking Cloth und einem Auflagegewicht von 9N eine definierte Anzahl von Hüben (vorwärts/rückwärts) gewischt, in drei Versuchen jeweils 100, 250 und 500 Hübe. Die Beurteilung erfolgt visuell, es erfolgt eine Benotung nach Noten von 1 für sehr gut bis 5 für ungenügend, wobei 1 spurlos, 2 wahrnehmbar, 3 gering, 4 stark und 5 sehr stark zerkratzt bedeutet.

Tabelle 4: Wischbeständigkeit gemäß Beispiel 3 von transparentem, nicht eingefärbtem PLEXIGLAS® 8N mit unterschiedlichen Konzentrationen an Additiv

| Zus. | 1% Additiv | | | 2% Additiv | | |
|---|---|---|---|---|---|---|
| | 100 | 250 | 500 | 100 | 250 | 500 |
| 1 | 4 | 5 | 5 | 4 | 5 | 5 |

(fortgesetzt)

| Zus. | 1% Additiv | | | 2% Additiv | | |
|---|---|---|---|---|---|---|
| | 100 | 250 | 500 | 100 | 250 | 500 |
| 7 | 3 | 3 | 4 | 2 | 2 | 2 |
| 8 | 3 | 3 | 4 | 2 | 2 | 3 |
| 15 | 4 | 5 | 5 | 4 | 5 | 5 |

Die erfindungsgemäßen Proben 7 und 8 zeigen eine deutliche Steigerung der Wischbeständigkeit gegenüber dem unbehandelten Material, wie auch gegenüber dem Additiv des Standes der Technik.

**Patentansprüche**

1. Zusammensetzungen bestehend aus

   a) einem Poly(alkyl)(meth)acrylat-Matrixmaterial
   b) zumindest einem Additiv der Formel (I)

   $$M^1_{m1}M^2_{m2}D^1_{d1}D^2_{d2} \qquad (I)$$

   mit

   $M^1 = [R_3SiO_{1/2}]$
   $M^2 = [R_2R^1SiO_{1/2}]$
   $D^1 = [R_2SiO_{2/2}]$
   $D^2 = [RR^1SiO_{2/2}]$

   wobei

   R unabhängig voneinander ein Alkylrest oder ein aromatischer oder ein alkylaromatischer Rest ist, wobei die Alkylreste bevorzugt 1 bis 4 Kohlenstoffatome, die aromatischen oder alkylaromatischen Reste bevorzugt 6 bis 8 Kohlenstoffatome aufweisen,
   $R^1$ unabhängig voneinander - $R^3$ - (O - $R^4$)$_p$ ist, wobei
   $R^4$ ein Polyesterrest ist,
   $R^3$ ein von Sauerstoffatomen unterbrochener p+1 valenter Kohlenwasserstoff ist, der 3 bis 10 Kohlenstoffatome aufweist,
   wobei p gleich 1 bis 4 ist,
   mit
   d1 = 5 bis 70,
   d2 = 0 bis 20,
   m1 = 0 bis 2,
   m2 = 0 bis 2,
   mit der Maßgabe, dass gilt:

   $$m1 + m2 = 2,$$

   N = d1 + d2 + 2 = 10 bis 80,

   $$d2 + m2 \geq 1.$$

2. Zusammensetzungen gemäß Anspruch 1, wobei (d2 + m2) * 100 / N von 4 % bis 40 % beträgt.

3. Zusammensetzungen gemäß einem der Ansprüche 1 oder 2, wobei die Radikale $R^3$ in Formel (I) unabhängig voneinander gesättigte oder ungesättigte von Sauerstoff unterbrochene Kohlenwasserstoffe mit p+1 Bindungsstel-

len, wobei $R^3$ aus den Fragmenten (a) und (b) besteht, wobei die beiden Fragmente über Sauerstoffatome miteinander verbunden sind.

4. Zusammensetzungen gemäß einem der Ansprüche 1 bis 3, wobei Fragment (a) gesättigte oder ungesättigte Kohlenwasserstoffe mit 2 bis 4 Kohlenstoffatomen, bevorzugt 2 bis 3 Kohlenstoffatomen aufweist und Fragment (b) gesättigte Kohlenwasserstoffe mit 1 bis 6 Kohlenstoffatomen, bevorzugt 2 bis 6 Kohlenstoffatomen aufweist und beide Fragmente (a) und (b) frei von Heteroatomen sind.

5. Zusammensetzungen gemäß einem der Ansprüche 1 bis 4, wobei die Polyesterreste $R^4$ aus 3 bis 30, bevorzugt aus 4 bis 20 und besonders bevorzugt aus 5 bis 15 Estereinheiten aufgebaut sind.

6. Zusammensetzungen gemäß einem der Ansprüche 1 bis 5, wobei die Polyesterreste $R^4$ aus Acylresten einer oder mehrerer der Säuren Essigsäure, Propionsäure, Buttersäure, Isobuttersäure, Valeriansäure, 3-Methyl-Buttersäure, Capronsäure, Önanthsäure, Caprylsäure 3,5,5-Trimethyl-capronsäure und den entsprechenden Hydroxysäuren oder Lactonen, mehr bevorzugt Valeriansäure, 3-Methyl-Buttersäure, Capronsäure, Önanthsäure, Caprylsäure, 3,5,5-Trimethyl-capronsäure und den entsprechenden Hydroxysäuren oder Lactonen und besonders bevorzugt Valeriansäure und Capronsäure und den entsprechenden Hydroxysäuren oder Lactonen aufgebaut sind.

7. Zusammensetzungen gemäß einem der Ansprüche 1 bis 6, wobei die Zusammensetzungen zu 0,05 Gew.-% bis 10 Gew.-%, mehr bevorzugt zu 0,1 Gew.-% bis 5 Gew.-%, insbesondere bevorzugt zu 0,5 Gew.-% bis 3 Gew.-%, aus dem Additiv der Formel (I) bezogen auf die Gesamtzusammensetzung bestehen.

8. Formmasse oder Formkörper enthaltend eine Zusammensetzung nach einem der Ansprüche 1 bis 7.

9. Formmasse oder Formkörper gemäß Anspruch 8 enthaltend ein Schlagzähmodifizierungsmittel, insbesondere in einem Anteil von 0,1 bis 15 Gew.-%, bevorzugt 0,5 bis 10 Gew.-% und ganz besonders bevorzugt 1 bis 6 Gew.-%, jeweils bezogen auf die Gesamtmasse der Formmasse bzw. des Formkörpers.

10. Formmasse oder Formkörper gemäß einem der Ansprüche 8 oder 9, wobei das Matrixmaterial a) ein Homopolymer, ein Copolymer oder Mischungen davon sind, wobei zumindest eine Komponente des Matrixmaterials a) zu 50 bis 100 Gew.-%, bevorzugt zu 80 bis 100 Gew.%, mehr bevorzugt zu 90 bis 100 Gew.-%, besonders bevorzugt weiter mehr bevorzugt 95 bis 100 Gew.-%, und insbesondere zu 99 bis 100 Gew. -% ein Polymerisat aus Methylmethacrylat ist.

11. Formmasse oder Formkörper gemäß einem der Ansprüche 8 bis 10, wobei die Formmasse oder Formkörper neben den Zusammensetzungen der Ansprüche 1 bis 7 und eventuellen Hilfs- und Füllstoffen weitere Zusätze wie Farbmittel enthält.

12. Verwendung von Zusammensetzungen nach einem der Ansprüche 1 bis 7 und der Formmasse oder Formkörper nach einem der Ansprüche 8 bis 11 als dekorative Abdeckblenden oder funktionelle Anbauteile, in Kraftfahrzeugen, Unterhaltungselektronik oder in Haushaltgeräten.

## Claims

1. Compositions consisting of

a) a poly(alkyl)(meth)acrylate matrix material
b) at least one additive of the formula (I)

$$M^1_{m1}M^2_{m2}D^1_{d1}D^2_{d2} \qquad (I)$$

with

$M^1 = [R_3SiO_{1/2}]$
$M^2 = [R_2R^1SiO_{1/2}]$
$D^1 = [R_2SiO_{2/2}]$
$D^2 = [RR^1SiO_{2/2}]$

where

R is independently an alkyl radical or an aromatic or alkylaromatic radical, where the alkyl radicals preferably have 1 to 4 carbon atoms and the aromatic or alkylaromatic radicals preferably have 6 to 8 carbon atoms,
$R^1$ is independently - $R^3$ - (O - $R^4$)$_p$ where
$R^4$ is a polyester radical,
$R^3$ is a p+1-valent hydrocarbon interrupted by oxygen atoms, having 3 to 10 carbon atoms,
where p is 1 to 4,
with
d1 = 5 to 70,
d2 = 0 to 20,
m1 = 0 to 2,
m2 = 0 to 2,
with the proviso that:

$$m1 + m2 = 2,$$

N = d1 + d2+2 = 10 to 80,

$$d2 + m2 \geq 1.$$

**2.** Compositions according to Claim 1, where (d2 + m2) * 100 / N is from 4% to 40%.

**3.** Compositions according to either of Claims 1 and 2, where the $R^3$ radicals in formula (I) are independently saturated or unsaturated oxygen-interrupted hydrocarbons having p+1 binding sites, where $R^3$ consists of the fragments (a) and (b), where the two fragments are bonded to one another via oxygen atoms.

**4.** Compositions according to any of Claims 1 to 3, where fragment (a) has saturated or unsaturated hydrocarbons having 2 to 4 carbon atoms, preferably 2 to 3 carbon atoms, and fragment (b) has saturated hydrocarbons having 1 to 6 carbon atoms, preferably 2 to 6 carbon atoms, and both fragments (a) and (b) are free of heteroatoms.

**5.** Compositions according to any of Claims 1 to 4, where the polyester radicals $R^4$ are formed from 3 to 30, preferably from 4 to 20 and more preferably from 5 to 15 ester units.

**6.** Compositions according to any of Claims 1 to 5, where the polyester radicals $R^4$ are formed from acyl radicals of one or more of the acids acetic acid, propionic acid, butyric acid, isobutyric acid, valeric acid, 3-methylbutyric acid, caproic acid, oenanthic acid, caprylic acid, 3,5,5-trimethylcaproic acid and the corresponding hydroxy acids or lactones, more preferably valeric acid, 3-methylbutyric acid, caproic acid, oenanthic acid, caprylic acid, 3,5,5-trimethylcaproic acid and the corresponding hydroxy acids or lactones, and more preferably valeric acid and caproic acid and the corresponding hydroxy acids or lactones.

**7.** Compositions according to any of Claims 1 to 6, where the compositions consist to an extent of 0.05% by weight to 10% by weight, more preferably to an extent of 0.1% by weight to 5% by weight, especially preferably to an extent of 0.5% by weight to 3% by weight, of the additive of the formula (I), based on the overall composition.

**8.** Moulding compound or shaped body comprising a composition according to any of Claims 1 to 7.

**9.** Moulding compound or shaped body according to Claim 8, comprising an impact modifier, especially in a proportion of 0.1% to 15% by weight, preferably 0.5% to 10% by weight and most preferably 1% to 6% by weight, based in each case on the total mass of the moulding compound or shaped body.

**10.** Moulding compound or shaped body according to either of Claims 8 and 9, wherein the matrix material a) is a homopolymer, a copolymer or mixtures thereof, where at least one component of the matrix material a) is a polymer of methyl methacrylate to an extent of 50% to 100% by weight, preferably to an extent of 80% to 100% by weight, more preferably to an extent of 90% to 100% by weight, especially preferably further more preferably 95% to 100% by weight, and especially to an extent of 99% to 100% by weight.

**11.** Moulding compound or shaped body according to any of Claims 8 to 10, wherein the moulding compound or shaped body, as well as the compositions of Claims 1 to 7 and any auxiliaries and fillers, contains further additions such as colorants.

**12.** Use of compositions according to any of Claims 1 to 7 and of the moulding compound or shaped body according to any of Claims 8 to 11 as decorative covering panels or functional installable components, in motor vehicles or consumer electronics, or in domestic appliances.

**Revendications**

**1.** Compositions, constituées par

a) un matériau matrice de poly((méth)acrylate (d'alkyle))
b) au moins un additif de formule (I)

$$M^1_{m1}M^2_{m2}D^1_{d1}D^2_{d2} \qquad (I)$$

dans laquelle

$M^1 = [R_3SiO_{1/2}]$
$M^2 = [R_2R^1SiO_{1/2}]$
$D^1 = [R_2SiO_{2/2}]$
$D^2 = [RR^1SiO_{2/2}]$

où

R représente, indépendamment, un radical alkyle ou un radical aromatique ou alkylaromatique, les radicaux alkyle présentant de préférence 1 à 4 atomes de carbone, les radicaux aromatiques ou alkylaromatiques présentant de préférence 6 à 8 atomes de carbone,
$R^1$ représentant, indépendamment, $-R^3-(O-R^4)_p$, où
$R^4$ représente un radical polyester,
$R^3$ représente un hydrocarbure p+1-valent interrompu par des atomes d'oxygène, qui présente 3 à 10 atomes de carbone,
p valant 1 à 4,
d1 = 5 à 70
d2 = 0 à 20,
m1 = 0 à 2,
m2 = 0 à 2,
à condition que

$$m1 + m2 = 2,$$

N = d1 + d2 + 2 = 10 à 80,

$$d2 + m2 \geq 1.$$

**2.** Compositions selon la revendication 1, (d2 + m2) * 100/N valant 4% à 40%.

**3.** Compositions selon l'une quelconque des revendications 1 ou 2, les radicaux $R^3$ dans la formule (I) représentant, indépendamment les uns des autres, des hydrocarbures saturés ou insaturés, interrompus par oxygène, présentant p + 1 sites de liaison, $R^3$ étant constitué par les fragments (a) et (b), les deux fragments étant reliés l'un à l'autre par l'intermédiaire d'atomes d'oxygène.

**4.** Compositions selon l'une quelconque des revendications 1 à 3, le fragment (a) présentant des hydrocarbures saturés ou insaturés comprenant 2 à 4 atomes de carbone, de préférence 2 à 3 atomes de carbone et le fragment (b)

présentant des hydrocarbures saturés comprenant 1 à 6 atomes de carbone, de préférence 2 à 6 atomes de carbone et les deux fragments (a) et (b) étant exempts d'hétéroatomes.

**5.** Compositions selon l'une quelconque des revendications 1 à 4, les radicaux polyesters $R^4$ étant constitués par 3 à 30, de préférence 4 à 20 et de manière particulièrement préférée 5 à 15 motifs ester.

**6.** Compositions selon l'une quelconque des revendications 1 à 5, les radicaux polyesters $R^4$ étant constitués par des radicaux acyle d'un ou de plusieurs des acides acide acétique, acide propionique, acide butyrique, acide isobutyrique, acide valérianique, acide 3-méthyl-butyrique, acide caproïque, acide œnanthique, acide caprylique, acide 3,5,5-triméthylcaproïque et les hydroxyacides ou lactones correspondants, plus préférablement l'acide valérianique, l'acide 3-méthyl-butyrique, l'acide caproïque, l'acide œnanthique, l'acide caprylique, l'acide 3,5,5-triméthylcaproïque et les hydroxyacides ou lactones correspondants et de manière particulièrement préférée l'acide valérianique et l'acide caproïque et les hydroxyacides ou lactones correspondants.

**7.** Compositions selon l'une quelconque des revendications 1 à 6, les compositions étant constituées par l'additif de formule (I) à raison de 0,05% en poids à 10% en poids, plus préférablement à raison de 0,1% en poids à 5% en poids, en particulier de préférence à raison de 0,5% en poids à 3% en poids, par rapport à la composition totale.

**8.** Masse de moulage ou corps moulé contenant une composition selon l'une quelconque des revendications 1 à 7.

**9.** Masse de moulage ou corps moulé selon la revendication 8, contenant un agent de modification de la résilience, en particulier en une proportion de 0,1 à 15% en poids, de préférence de 0,5 à 10% en poids et de manière tout particulièrement préférée de 1 à 6% en poids, à chaque fois par rapport à la masse totale de la masse de moulage ou du corps moulé.

**10.** Masse de moulage au corps moulé selon l'une quelconque des revendications 8 ou 9, le matériau de matrice a) étant un homopolymère, un copolymère ou des mélanges de ceux-ci, au moins un composant du matériau de matrice a) étant, à raison de 50 à 100% en poids, de préférence à raison de 80 à 100% en poids, plus préférablement à raison de 90 à 100% en poids, de manière particulièrement préférée à raison de 95 à 100 % en poids et en particulier à raison de 99 à 100 % en poids, un polymère de méthacrylate de méthyle.

**11.** Masse de moulage ou corps moulé selon l'une quelconque des revendications 8 à 10, la masse de moulage ou le corps moulé contenant, outre les compositions des revendications 1 à 7 et d'éventuels adjuvants et charges, d'autres additifs tels que des colorants.

**12.** Utilisation de compositions selon l'une quelconque des revendications 1 à 7 et de la masse de moulage ou du corps moulé selon l'une quelconque des revendications 8 à 11 comme tôles de recouvrement décoratives ou accessoires fonctionnels dans des véhicules automobiles, l'électronique grand public ou les appareils domestiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3484157 A
- DE 2611782
- US 3700487 A
- GB 1308697 A
- US 3862261 A
- DE 2317874
- NL 6608316
- DE 1963278
- DE 2454076
- US 3766299 A
- BE 821403
- US 3451838 A
- US 3707397 A
- EP 180129 A
- US 6420451 B
- EP 1640418 A
- DE 10059454
- WO 2012034821 A
- EP 0208734 A
- WO 2005108486 A
- WO 1986004072 A